# FASCICULE DE BREVET EUROPEEN

(11) **EP 4 213 129 B1**
(45) Date de publication et mention de la délivrance du brevet: **31.07.2024**
(21) Numéro de dépôt: 23152121.2
(22) Date de dépôt: 18.01.2023
(51) Int. Cl.: G08G 5/00, H04L 9/40, H04W 12/08, G08G 5/06

(54) **PROCÉDÉ DE SÉCURISATION D'UNE COMMUNICATION RADIO ENTRE UN AÉRONEF ET UN AGENT DE PISTE**
VERFAHREN ZUR SICHERUNG EINER FUNKKOMMUNIKATION ZWISCHEN EINEM FLUGZEUG UND EINEM SPURAGENTEN
METHOD FOR SECURING A RADIO COMMUNICATION BETWEEN AN AIRCRAFT AND A RUNWAY AGENT

(30) Priorité: 18.01.2022 FR 2200425
(43) Date de publication de la demande: 19.07.2023
(73) Titulaire: Globalsys, 94380 Bonneuil sur Marne (FR)
(72) Inventeur: RETALI, Dominique, 94500 CHAMPIGNY-SUR-MARNE (FR)
(74) Mandataire: Cabinet Boettcher

(56) Documents cités:
- EP-A2- 1 280 316
- FR-A1- 2 829 324

## Description

### ARRIERE PLAN DE L'INVENTION

Il existe un besoin d'établir une communication entre les pilotes d'un aéronef et le personnel au sol pendant les opérations à l'arrivée ou au départ de l'aéroport. Ces communications permettent de coordonner l'activité des pilotes et du personnel au sol (récupération ou chargement des bagages, déplacement de l'aéronef à l'aide d'un tracteur...). Traditionnellement, l'agent de piste qui souhaite établir une communication avec l'aéronef est muni d'un casque et branche son cordon directement sur un connecteur porté par boîtier disposé sur l'atterrisseur de l'aéronef. Pour faciliter l'établissement de ces communications, on a proposé d'établir une communication radio entre l'agent de piste et l'aéronef. A cet effet, on a proposé de munir l'aéronef d'une antenne dédiée permettant des communications sur des fréquences libres de droit et de faible portée, par exemple de type WIFI, DECT... Cependant, l'établissement d'une connexion entre un terminal mobile d'un agent de piste (tel qu'une tablette ou un téléphone mobile) et l'aéronef doit être envisagé dans des conditions de sécurité particulières, afin que soient interdites des communications de ce type qui seraient établies par des personnes non habilitées.

On connaît du document FR2829324 un procédé d'établissement d'une communication radio entre au moins un abonné résidant implanté sur un site tel qu'un agent de piste et détenant une station mobile (comme un terminal tel qu'une tablette ou un téléphone...) et au moins un abonné itinérant implanté dans un véhicule (tel qu'un aéronef) équipé avec une station de base apte à émettre un signal de balise identifiant la station de base, chaque station mobile étant adaptée à percevoir plusieurs signaux de balise émis par différentes stations de base, le procédé comportant les étapes de sélectionner une station de base par une station mobile et d'établir une communication entre la station mobile et la station de base sélectionnée. Cette disposition permet une reconnaissance de l'aéronef à distance par le terminal de communication sans fil de l'agent de piste.

Il convient de vérifier qu'une personne tentant de se connecter via un terminal à un aéronef est bien habilitée à cet effet. A cet égard, on sait que les agents de piste sont employés par divers organismes, tels que les exploitants d'aéronef eux-mêmes (notamment les compagnies aériennes) ou des sociétés de prestation de services (personnel aéroportuaire, prestataires de service s'occupant du chargement/déchargement de bagages, du ravitaillement de l'aéronef en carburant, en plateaux repas, etc...)

### OBJET DE L'INVENTION

L'invention vise à proposer un procédé de sécurisation de communications radio entre un aéronef et les agents de piste qui tentent de se connecter à l'aéronef.

### RESUME DE L'INVENTION

En vue de la réalisation de ce but, on propose un procédé de sécurisation d'une communication radio entre un agent de piste et un aéronef muni d'une station de base adaptée à émettre un signal de balise, le procédé comportant les étapes de :
- Etablir une première base de données recensant des organismes tels que des exploitants d'aéronef et des sociétés de prestation de services employant des agents de piste susceptibles d'établir une communication radio avec un des aéronefs d'un des exploitants d'aéronef, et, pour chaque exploitant d'aéronef, recensant les autres exploitants d'aéronef et les sociétés de prestation de services qu'il autorise à pouvoir faire établir par leurs agents de piste une communication radio avec l'un de ses aéronefs ;
- Pour chaque organisme, établir une deuxième base de données recensant les agents de piste qu'il emploie et susceptibles d'établir une communication radio avec des aéronefs, et associant à chaque agent de piste des données biométriques;
- Munir l'agent de piste d'un terminal comportant des moyens de lecture de données biométriques et adapté à entrer en communication radio avec l'aéronef;
- Intégrer dans le signal de balise de l'aéronef des informations d'identification de l'aéronef ;
- Lors d'une tentative d'établissement d'une communication entre l'agent de piste et l'aéronef que l'agent a identifié et sélectionné à l'aide du signal de balise reçu par le terminal, effectuer un premier contrôle en utilisant les moyens de lecture de données biométriques pour faire identifier par le terminal l'agent de piste utilisant le terminal par comparaison avec des données biométriques extraites de la deuxième base de données, et en déduire son organisme employeur ;
- Si le premier contrôle est positif, effectuer un deuxième contrôle en vérifiant à l'aide d'informations extraites de la première base de données que l'organisme employeur de l'agent de piste est l'exploitant de l'aéronef ou l'un des organismes autorisés ;
- Si le deuxième contrôle est positif, établir une connexion permettant une communication radio entre l'agent et l'aéronef.

Ainsi, la connexion entre le terminal et la station de base n'est établie qu'à l'issue d'un double contrôle : une première vérification au niveau du terminal qui permet d'identifier l'agent utilisant le terminal, et une deuxième vérification (effectuée soit au niveau du terminal, soit au niveau de la station de base de l'aéronef) qui permet de s'assurer que l'agent de piste qui tente d'établir la communication radio est bien rattaché à l'exploitant d'aéronef lui-même ou à l'un des organismes autorisés par l'exploitant d'aéronef à établir une telle communication avec l'un de ses aéronefs.

Par données extraites de la première base de données, on entend que la station de base (ou plus généralement l'aéronef) est capable soit de se connecter en temps réel (par exemple par un réseau WIFI ou GSM) à un serveur hébergeant la première base de données pour interroger celle-ci, soit héberge une copie de cette base et interroge cette copie. En effet, l'aéronef peut se trouver loin de tout réseau et doit pouvoir effectuer les vérifications requises pour l'établissement des communications radio avec les agents de piste même en l'absence de réseau.

Par données extraites de la deuxième base de données, on entend que le terminal est capable soit de se connecter en temps réel à un serveur hébergeant la deuxième base de données, soit héberge une copie de cette base et interroge cette copie. Par exemple, ces données peuvent se trouver sur une carte mémoire rapportée sur le terminal.

De préférence, les copies des bases de données sont mises à jour régulièrement.

De préférence, la première base de données est établie et enrichie par un organisme tiers indépendant des exploitants d'aéronefs et des sociétés de prestation de services, par exemple une des agences de régulation ou de normalisation telles que la FAA, l'EASA, l'ARINC... Les exploitants d'aéronef et les sociétés de prestation de services se déclarent auprès de l'organisme tiers indépendant pour figurer dans la première base de données et les exploitants d'aéronef identifient les organismes autorisés à établir des communications radio avec ses aéronefs.

Selon un mode préféré de mise en œuvre de l'invention, on intègre dans le signal de balise de l'aéronef, en plus des informations d'identification de l'aéronef, des informations d'identification organismes autorisés par l'exploitant d'aéronef, extraites de la première base de données.

De préférence alors, le deuxième contrôle est effectué au niveau du terminal. Ainsi, Les deux contrôles sont effectués au niveau du terminal. Il conviendra alors que les d'informations extraites de la première base de données concernant les organismes autorisés soient disponibles au niveau du terminal pour effectuer le deuxième contrôle. Ces informations peuvent être incluses directement dans le signal de balise ou être envoyées dans un message émis par la station de base en réponse à une demande de connexion émise par le terminal après sélection par l'utilisateur de l'aéronef avec lequel il veut se connecter.

### BREVE DESCRIPTION DES DESSINS

L'invention sera mieux comprise à la lecture de la description qui suit d'un mode particulier de mise en œuvre de l'invention, en référence aux figures des dessins annexés, parmi lesquelles
[Fig. 1] La figure 1 est une vue en perspective d'un aéronef en cours d'établissement d'une communication radio avec un terminal d'un agent de piste ;
[Fig. 2] La figure 2 est une table extraite d'une première base de données recensant les organismes dont les agents de piste sont susceptibles d'établir une communication radio avec des aéronefs ;
[Fig. 3] La figure 3 est une table extraite de la première base de données recensant les identifiants donnés aux exploitants d'aéronef et sociétés prestataires de services ;
[Fig. 4] La figure 4 est un une table extraite de la première base de données recensant les autorisations données par l'un des exploitants d'aéronefs à des sociétés de prestation de services pour établir une communication radio avec ses aéronefs;
[Fig. 5] La figure 5 est une table extraite d'une deuxième base de données établie par un organisme recensant les agents de piste qu'il emploie et qui sont susceptibles d'entrer en communication radio avec l'aéronef.

### DESCRIPTION DETAILLEE DE L'INVENTION

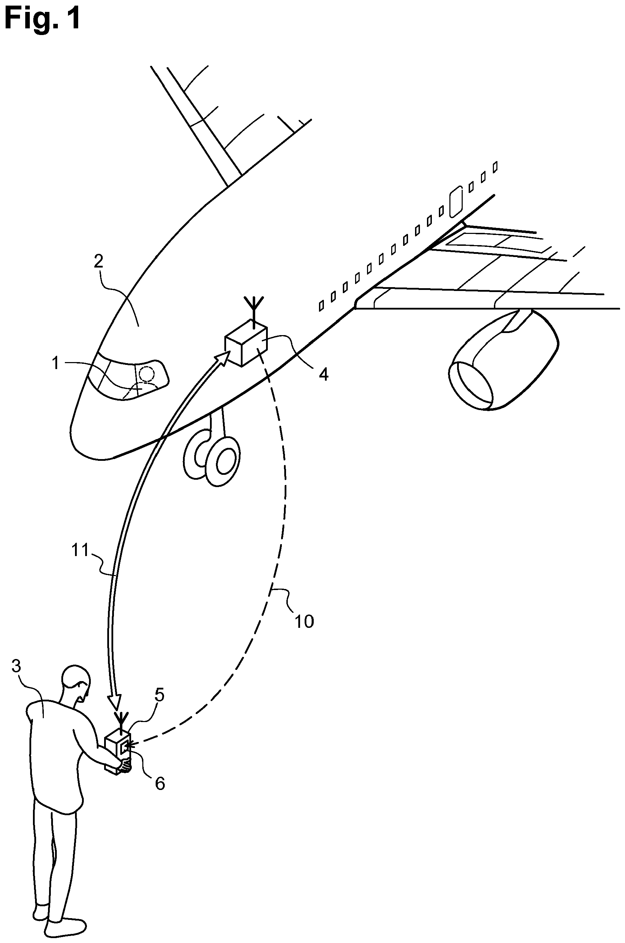

En référence à la figure 1, le procédé selon l'invention est destiné à établir une communication radio entre des membres 1 de l'équipage d'un aéronef 2 et des abonnés résidants, comme un agent de piste 3 d'un site aéroportuaire sur lequel l'aéronef fait escale.

De façon connue en soi, l'aéronef 2 est équipé d'une station de base 4 associée à un système de radiocommunication tandis que les agents de piste 3 détiennent un terminal 5 adapté à communiquer avec la station de base 4.

Afin de pouvoir établir des communications avec les agents de piste, et de façon connue en soi, la station de base 4 se fait connaître de ceux-ci en émettant un signal de balise 10 dans lequel est inclus une référence d'identification de la station de base correspondante et une référence d'identification de l'aéronef (telle que son immatriculation). Alternativement, la référence d'identification de la base permet, par consultation d'une base de données, l'identification de l'aéronef.

L'arrivée de l'aéronef dans la zone de portée du terminal 5 est détectée par la réception du signal de balise 10 émis par la station de base 4, symbolisé par une flèche en trait mixte sur la figure. L'agent de piste 3 peut alors identifier les aéronefs à sa portée et sélectionner l'aéronef avec lequel il souhaite entrer en communication radio. Une communication radio 11 est alors établie comme illustré par la flèche en double trait sur la figure.

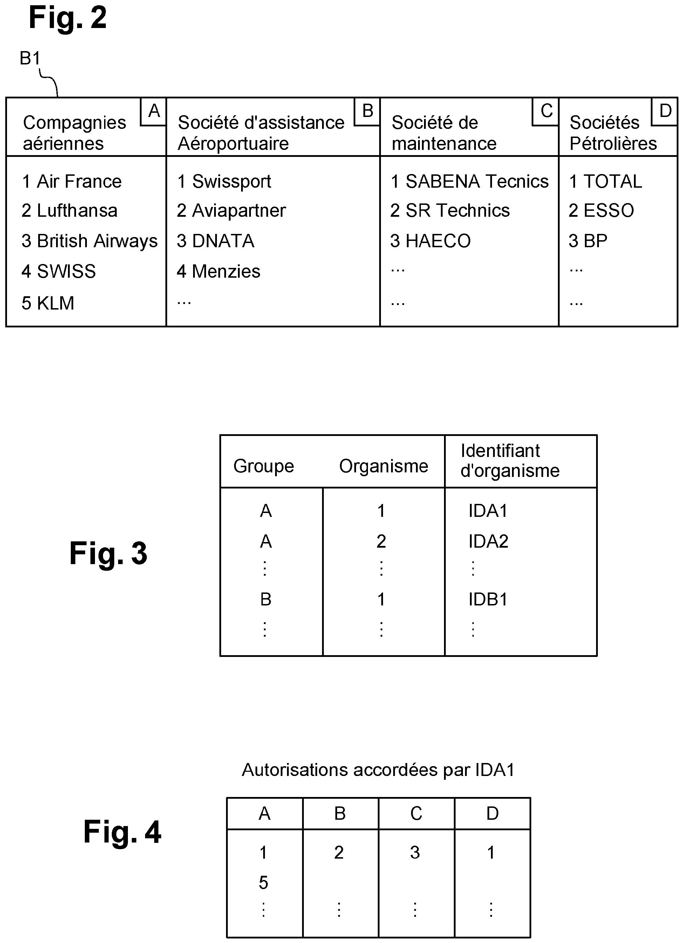

L'établissement de cette communication est maintenant décrit selon un mode particulier de mise en œuvre de l'invention en relation aux figures 2 à 5.

Au préalable, et comme illustré aux figures 2,3,4, il a été établi une première base de données B1 répertoriant des organismes susceptibles d'employer l'agent de piste 3, tels que les exploitants d'aéronef et les sociétés de prestation de services employant des agents de piste qui sont amenés à établir des communications radio avec les aéronefs de la compagnie. La première base de données B1 est de préférence établie par un organisme tiers indépendant des exploitants d'aéronef et des sociétés de prestation de services. On donne à la figure 2 un exemple simplifié de constitution de la première base de données B1 ne comportant que quatre groupes d'organismes. Les noms d'exploitants d'aéronef ou de sociétés de prestation de services ne sont donnés qu'à titre purement illustratif et n'engagent pas ces sociétés ni ne limitent la portée de l'invention :
- Groupe A : les Exploitants d'Aéronefs, comportant ici 1 : AIR France, 2 : Lufthansa, 3 : British Airways, 4 : SWISS, 5: KLM, etc....
- Groupe B : les Sociétés d'Assistance Aéroportuaire, comportant ici 1 : Swissport, 2 : Aviapartner, 3 : DNATA, 4 : Menzies, etc....
- Groupe C : les Sociétés de Maintenance - Réparation, comportant ici 1 : SABENA Technics, 2 : SR Technics, 3 : HAECO, etc....
   Groupe D = les Sociétés Pétrolières, comportant ici 1 : TOTAL, 2 : ESSO, 3 : BP, etc....

Comme illustré à la figure 3, la première base de données B1 attribue des identifiants d'organisme IDA1, IDA2, IDB1... à chaque exploitant d'aéronefs ou société de prestation de services. Comme illustré à la figure 4, la première base de données B1 compile également les autorisations qu'octroient les exploitants d'aéronef à certains autres exploitants d'aéronef (cas de compagnies aériennes soeurs comme AIR France/KLM) et à certaines sociétés de prestations de services pour que leurs agents puissent établir une communication radio avec ses aéronefs, ces autorisations étant ici compilées sous forme d'une table. Ainsi ici, AIR FRANCE a autorisé ses propres agents de piste ainsi que ceux de la compagnie soeur KLM, et a également les agents de piste des sociétés Aviapartner, HAECO et TOTAL à entrer en communication radio avec ses aéronefs.

Ainsi la première base de données B1 récapitule, pour un exploitant d'aéronefs donné (AIR FRANCE dans cet exemple) les différents organismes (chacun étant désigné par son code tel qu'établi suivant les étapes ci-dessus) dont les agents de piste sont autorisés à établir des communications avec ses aéronefs.

Selon un mode préféré de mise en œuvre de l'invention, des informations d'identification de l'exploitant d'aéronef et des organismes autorisés par l'exploitant d'aéronef sont transmises dans le signal de balise 10. On peut par exemple inclure dans le signal de balise les identifiants d'organisme IDA1, IDB1... de l'exploitant d'aéronef et des sociétés autorisées, sous la forme d'un message codé MC.

Si par exemple AIR FRANCE a autorisé ses propres agents de piste, ceux de KLM et ceux des sociétés Aviapartner, HAECO et TOTAL à entrer en communication radio avec ses aéronefs, Dans ce cas le message codé MC transmis par le signal de balise sera : MC={A=1;5,B=2,C=3,D=1}

Si AIR France autorise toutes les sociétés pétrolières à établir une communication radio avec ses aéronefs, alors le message codé transmis par le signal de balise sera MC={A=1;5,B=2,C=3,D=0}, le 0 signifiant que toutes les sociétés du groupe concerné sont autorisées.

Supposons maintenant que SWISS a autorisé ses propres agents ainsi que les agents de piste des sociétés Swissport, SR Technics et ESSO, le message codé transmis par le signal de balise sera : MC={A=4,B=1,C=2,D=2}.

Pour former ce message codé MC, la station de base 4 extrait des données de la première base de données B1. Cette extraction peut prendre plusieurs formes. Une connexion peut par exemple être établie par une mise en communication des stations de base des aéronefs avec un service opérationnel de l'aéroport lui donnant accès en temps réel à la première base de données B1 hébergée sur un serveur de l'organisme indépendant. En variante, la station de base 4 peut héberger une copie de la première base de données B1, et plus spécifiquement de la partie de celle-ci concernant uniquement les autorisations accordées par la exploitant d'aéronef. Cette copie est de préférence mise à jour régulièrement pour tenir compte des éventuelles modifications de ces autorisations.

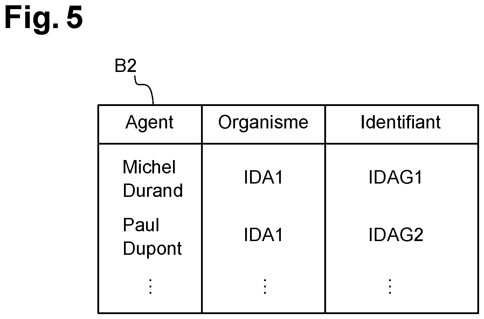

Comme illustré à la figure 5, chaque exploitant d'aéronef ou société de prestation de services a également établi au préalable une seconde base de données B2 comportant la liste de ses agents de piste susceptibles d'établir des communications radio avec des aéronefs, des identifiants d'agents associés IDAG1, IDAG2..., ainsi que des données biométriques permettant d'identifier les agents de piste de façon certaine. Ici, par exemple, on a illustré de façon schématique la base de données que pourrait constituer la compagnie dont l'identifiant est IDA1 (les données biométriques ne sont pas représentées).

La connexion entre l'agent de piste 3 et l'aéronef est maintenant décrite. Lorsque l'aéronef 2 arrive sur l'aéroport, la station de base 4, activée à cet effet (par exemple par un contact sur l'un des atterrisseurs), délivre le signal de balise 10 contenant, outre l'identification de l'aéronef, des informations d'identification de l'exploitant de l'aéronef en question, et des organismes autorisés par l'exploitant d'aéronefs, par exemple ici le message codé MC d'autorisations de connexion.

Le terminal 5 de l'agent de piste 3 reçoit les signaux de balise des divers aéronefs à portée, et l'agent de piste 3 sélectionne alors l'aéronef 2 avec lequel il veut établir une communication radio.

Selon l'invention, avant tout établissement d'une telle communication radio, un premier contrôle est effectué au niveau du terminal 5 par lequel l'agent de piste 3 s'identifie auprès du terminal 5. A cet effet, il utilise un lecteur biométrique 6 du terminal 5 pour s'identifier, par exemple ici un lecteur d'empreintes digitales. Le terminal 5 consulte des données extraites de la deuxième base de données B2 pour comparer l'empreinte digitale acquise par le lecteur biométrique et les empreintes digitales contenues dans la base de données B2 et ainsi identifier de façon certaine l'agent de piste 3. Cette consultation peut prendre plusieurs formes. Une connexion peut par exemple être établie par le terminal 5 lui donnant accès en temps réel à la deuxième base de données B2 hébergée sur un serveur de son organisme employeur . En variante, le terminal peut héberger une copie de la deuxième base de données B2. Cette copie est de préférence mise à jour régulièrement pour tenir compte des éventuelles modifications de ces autorisations. Cette copie peut par exemple être contenue sur un support mémoire infalsifiable amovible rapporté sur le terminal 5. On pourra faire en sorte que l'identification ainsi effectuée reste valable pendant un certain intervalle de temps (typiquement quelques heures), pour éviter les consultations trop fréquentes de la base de données B2.

Une fois l'agent de piste identifié, un deuxième contrôle est effectué, ici par le terminal 5, qui identifie l'organisme employant l'agent de piste par son identifiant d'organisme et vérifie par lecture des informations contenues dans le signal de balise 10 de la station de base 4 de l'aéronef 2 que l'organisme employeur de l'agent de piste est bien autorisé par l'exploitant d'aéronef à pouvoir établir des communications radio avec ses aéronefs. Pour ce faire, elle compare l'identifiant d'organisme de l'organisme employant l'agent de piste 3 avec la liste des identifiants d'organismes autorisés que le terminal a reçue dans le signal de balise 10, ou déduite du message codé MC contenu dans le signal de balise 10. Si l'identifiant d'organisme concerné se trouve bien sur la liste (soit l'exploitant d'aéronef elle-même, soit l'une des sociétés autorisées), le terminal 5 est alors autorisé à mettre en œuvre une procédure de connexion pour établir une communication radio avec l'aéronef, par exemple selon un protocole DECT, Bluetooth, wifi... L'agent de piste 3 peut dès lors établir une communication radio avec l'aéronef 2.

Ainsi, l'établissement de la communication radio passe par un double contrôle portant d'une part sur le contrôle de l'identité de l'agent de piste, et le contrôle de l'autorisation qui a été octroyée par l'exploitant d'aéronef à l'organisme employeur de l'agent de piste d'entrer en communication radio avec ses aéronefs. Ces contrôles se font ici au niveau du terminal de l'agent de piste.

Une fois la connexion établie, l'agent de piste ou un équipement sous son contrôle peut envoyer ou recevoir des données de ou vers l'aéronef.

L'invention n'est pas limitée à ce qui vient d'être décrit, mais englobe des variantes de réalisation sans sortir du cadre de l'invention tel que défini par les revendications. En particulier, on peut prévoir que la copie de la première base de données dans la station de base de l'aéronef soit renouvelée à intervalle régulier, soit quand l'aéronef accède à une infrastructure portuaire lui permettant d'établir une communication via internet avec le serveur de l'organisme tiers indépendant qui héberge la première base de données, soit lors d'une visite de l'aéronef à un centre de maintenance de la exploitant d'aéronef.

De même, la copie de la deuxième base de données dans le terminal est de préférence renouvelée régulièrement, par exemple quand le terminal 5 est ramené par l'agent de piste après son service pour être mis en place dans son réceptacle de chargement de sa batterie.

Bien qu'ici les informations d'identification des organismes autorisés par l'exploitant d'aéronef sont intégrés dans le signal de balise émis par la station de base, on pourra également faire transmettre ces informations dans un message émis par la station de base en réponse à une demande de connexion émise par le terminal après sélection par l'utilisateur de l'aéronef avec lequel il veut se connecter et dont le terminal a reçu le signal de balise.

Bien qu'ici les deux contrôles soient effectués au niveau du terminal 5, on pourra effectuer le deuxième contrôle au niveau de la station de base de l'aéronef. Dans ce cas, les informations d'identification des organismes autorisés par l'exploitant d'aéronef ne sont pas transmises au terminal, mais sont utilisées par la station de base pour vérifier que l'organisme employeur de l'agent de piste figure bien parmi les organismes autorisés. A cet effet, le terminal envoie à la station de base le code d'identification de son organisme employeur.

Bien qu'ici les données biométriques concernent une ou plusieurs empreintes digitales, les données biométriques pourront concerner (alternativement ou en addition) une ou plusieurs autres données comme par exemple une donnée relative à l'œil (iris) par exemple, une donnée relative au visage de l'utilisateur ... Le lecteur biométrique pourra ainsi identifier un utilisateur par reconnaissance digitale et/ou par reconnaissance faciale et/ou par reconnaissance oculaire ...

Bien qu'ici les informations échangées entre l'aéronef et l'utilisateur (comme une information d'identification) soient non cryptées, au moins une information échangée entre l'aéronef et l'utilisateur pourra être cryptée. Ceci permettra de sécuriser encore davantage la communication entre l'aéronef et l'utilisateur. Le cryptage pourra se faire par exemple à l'aide d'une clé de cryptage (64 bits, 128 bits ...) ou bien par toute autre méthode.

Par ailleurs, une authentification supplémentaire (de l'aéronef par l'utilisateur et/ou de l'utilisateur par l'aéronef) pourra être mise en œuvre (par exemple par cryptographie et notamment une cryptographie asymétrique et par exemple une cryptographie par échange de clé publique/clé privé ...ou par toute autre méthode). Ceci permettra de sécuriser encore davantage la communication entre l'aéronef et l'utilisateur.

## Revendications

1. Procédé de sécurisation d'une communication radio entre un agent de piste (3) et un aéronef (1) muni d'une station de base (4) adaptée à émettre un signal de balise (10), le procédé comportant les étapes de :
- Etablir une première base de données (B1) recensant des organismes tels que des exploitants d'aéronef et des sociétés de prestation de services employant des agents de piste susceptibles d'établir une communication radio avec un des aéronefs d'une des exploitants d'aéronef, et recensant pour chaque exploitant d'aéronef les organismes qu'il autorise à pouvoir faire établir par ses agents de piste une communication radio avec l'un de ses aéronefs ;
- Pour chaque organisme, établir une deuxième base de données (B2) recensant les agents de piste qu'il emploie et associant à chaque agent de piste des données biométriques;
- Munir l'agent de piste d'un terminal (5) comportant des moyens de lecture de données biométriques (6) et adapté à entrer en communication radio avec l'aéronef;
- Intégrer dans le signal de balise de l'aéronef des informations d'identification de l'aéronef ;
- Lors d'une tentative d'établissement d'une communication entre l'agent de piste et l'aéronef que l'agent a identifié et sélectionné à l'aide du signal de balise reçu par le terminal, effectuer un premier contrôle en utilisant les moyens de lecture de données biométriques (6) pour faire identifier par le terminal l'agent de piste utilisant le terminal par comparaison avec des données biométriques extraites de la deuxième base de données (B2), et en déduire son organisme employeur ;
- Si le premier contrôle est positif, effectuer un deuxième contrôle en vérifiant à l'aide d'informations extraites de la première base de données (B1) que l'organisme employeur de l'agent de piste est l'exploitant de l'aéronef ou l'un des organismes autorisés ;
- Si le deuxième contrôle est positif, établir une connexion permettant une communication radio (11) entre l'agent et l'aéronef.

2. Procédé selon la revendication 1, dans lequel le deuxième contrôle est effectué au niveau du terminal à l'aide d'informations d'identification de l'exploitant d'aéronef et des organismes autorisés par l'exploitant d'aéronef extraites de la base de donnée (B1) et envoyées par l'aéronef au terminal.

3. Procédé selon la revendication 2, dans lequel les informations d'identification sont incluses dans le signal de balise (10).

4. Procédé selon la revendication 3, dans lequel le signal de balise (10) contient un message codé (MC) contenant les informations d'identification.

5. Procédé selon la revendication 1, dans lequel la station de base (4) de l'aéronef héberge une copie de la première base des données (B1).

6. Procédé selon la revendication 1, dans lequel le terminal (5) héberge une copie de la deuxième base de données (B2) .

7. Procédé selon l'une des revendications précédentes, dans lequel au moins une information échangée entre l'aéronef et l'agent de piste est cryptée.

## Patentansprüche

1. Verfahren zur Sicherung einer Funkkommunikation zwischen einem Ramp Agent (3) und einem Luftfahrzeug (1), das mit einer Basisstation (4) versehen ist, die geeignet ist, ein Bakensignal (10) zu senden, wobei das Verfahren die Schritte aufweist:
- Erstellen einer ersten Datenbank (B1), die Organismen wie Luftfahrzeugbetreiber und Dienstleistungsfirmen erfasst, die Ramp Agents beschäftigen, die in der Lage sind, eine Funkkommunikation mit einem der Luftfahrzeuge eines der Luftfahrzeugbetreiber aufzubauen, und für jeden Luftfahrzeugbetreiber die Organismen erfasst, die er autorisiert, von ihren Ramp Agents eine Funkkommunikation mit einem seiner Luftfahrzeuge aufbauen lassen zu können;
- für jeden Organismus, Erstellen einer zweiten Datenbank (B2), die die Ramp Agents erfasst, die er beschäftigt, und die jedem Ramp Agent biometrische Daten zuordnet;
- Ausstatten des Ramp Agent mit einem Endgerät (5), das Leseeinrichtungen von biometrischen Daten (6) aufweist und geeignet ist, mit dem Luftfahrzeug in Funkkommunikation zu treten;
- Integrieren von Identifikationsinformationen des Luftfahrzeugs in das Bakensignal des Luftfahrzeugs;
- bei einem Versuch des Aufbaus einer Kommunikation zwischen dem Ramp Agent und dem Luftfahrzeug, das der Agent mit Hilfe des vom Endgerät empfangenen Bakensignals identifiziert und ausgewählt hat, Ausführen einer ersten Kontrolle unter Verwendung der Leseeinrichung von biometrischen Daten (6), um den das Endgerät verwendenden Ramp Agent durch Vergleich mit aus der zweiten Datenbank (B2) entnommenen biometrischen Daten durch das Endgerät identifizieren zu lassen und daraus seines Arbeitgeber-Organismus abzuleiten;
- wenn die erste Kontrolle positiv ist, Ausführen einer zweiten Kontrolle durch Überprüfen mit Hilfe von aus der ersten Datenbank (B1) entnommenen Informationen, dass der Arbeitgeber-Organismus des Ramp Agent der Betreiber des Luftfahrzeugs oder einer der autorisierten Organismen ist;
- wenn die zweite Kontrolle positiv ist, Aufbau einer Verbindung, die eine Funkkommunikation (11) zwischen dem Agent und dem Luftfahrzeug erlaubt.

2. Verfahren nach Anspruch 1, wobei die zweite Kontrolle im Bereich des Endgeräts mit Hilfe von Identifikationsinformationen des Luftfahrzeugbetreibers und der vom Luftfahrzeugbetreiber autorisierten Organismen ausgeführt wird, die aus der Datenbank (B1) entnommen und vom Luftfahrzeug an das Endgerät geschickt werden.

3. Verfahren nach Anspruch 2, wobei die Identifikationsinformationen im Bakensignal (10) enthalten sind.

4. Verfahren nach Anspruch 3, wobei das Bakensignal (10) eine die Identifikationsinformationen enthaltende codierte Nachricht (MC) enthält.

5. Verfahren nach Anspruch 1, wobei die Basisstation (4) des Luftfahrzeugs eine Kopie der ersten Datenbank (B1) hostet.

6. Verfahren nach Anspruch 1, wobei das Endgerät (5) eine Kopie der zweiten Datenbank (B2) hostet.

7. Verfahren nach einem der vorhergehenden Ansprüche, wobei mindestens eine zwischen dem Luftfahrzeug und dem Ramp Agent ausgetauschte Information verschlüsselt ist.

## Claims

1. A method of securing radio communication between a ramp agent (3) and an aircraft (1) provided with a base station (4) adapted to transmit a beacon signal (10), the method comprising the steps of:
- establishing a first database (B1) identifying organizations such as aircraft operators and service providers that employ ramp agents who might establish radio communication with an aircraft of at least one of the aircraft operators, and, for each aircraft operator, identifying the organizations that it authorizes to be able to have their ramp agents establish radio communication with any of its aircraft;
- for each organization, establishing a second database (B2) identifying its employed ramp agents and associating biometric data with each ramp agent;
- providing the ramp agent with a terminal (5) including reader means for reading biometric data (6) and adapted to enter into radio communication with the aircraft;
- incorporating aircraft identification information in the aircraft beacon signal;
- when attempting to establish communication between the ramp agent and an aircraft that the agent has selected after identifying it by using the beacon signal received by the terminal, performing a first check using the biometric data reader means (6) to enable the terminal to identify the ramp agent who using the terminal by comparison with biometric data extracted from the second database (B2), and to deduce therefrom the agent's employer organization;
- if the first check is positive, performing a second check, making use of information extracted from the first database (B1), to verify that the ramp agent's employer organization is the aircraft operator itself or one of the organizations it has authorized; and
- if the second check is positive, establish a connection allowing radio communication (11) between the ramp agent and the aircraft.

2. The method according to claim 1, wherein the second check is performed by the terminal using identification information for the aircraft operator and for the organizations that are authorized by the aircraft operator, which information is extracted from the first database (B1) and is sent by the aircraft to the terminal.

3. The method according to claim 2, wherein the identification information is included in the beacon signal (10) .

4. The method according to claim 3, wherein the beacon signal (10) contains a coded message (MC) containing the identification information.

5. The method according to claim 1, wherein the aircraft base station (4) hosts a copy of the first database (B1).

6. The method according to claim 1, wherein the terminal (5) hosts a copy of the second database (B2).

7. The method according to any preceding claim, wherein at least some of the information exchanged between the aircraft and the ramp agent is encrypted.
